# EUROPEAN PATENT APPLICATION

(11) **EP 4 815 082 A1**
(43) Date of publication of application: **30.09.2026**
(21) Application number: 26162873.9
(22) Date of filing: 06.03.2026
(51) Int. Cl.: H01M 10/04, H01M 10/44, H01M 10/48, H01M 10/613, H01M 10/615

(54) **FORMATION DEVICE AND METHOD FOR SECONDARY BATTERY**

(30) Priority: 25.03.2025 KR 20250037919; 25.06.2025 KR 20250084708
(71) Applicant: SAMSUNG SDI CO., LTD., Yongin-si, Gyeonggi-do 17084 (KR)
(72) Inventor: KWAK, Hyojun, 17084 Yongin-si (KR); JUNG, Dongwoo, 17084 Yongin-si (KR); KIM, Hyeongjun, 17084 Yongin-si (KR); LEE, Ilbok, 17084 Yongin-si (KR)
(74) Representative: Maiwald GmbH

(57) **Abstract**

According to embodiments of the present disclosure, a formation device for a secondary battery includes a temperature controller for controlling a temperature of the secondary battery, a temperature sensor for measuring the temperature of the secondary battery, a charging/discharging unit including a probe contacting a terminal of the secondary battery, a vacuum tube for removing gas inside the secondary battery, and a controller for charging the secondary battery until a state of charge of the secondary battery reaches a termination capacity, wherein the controller controls the temperature controller to maintain a set temperature range for the temperature of the secondary battery measured by the temperature sensor during the charging, and controls the vacuum tube during the charging, and wherein the termination capacity may be 40 %-90 %.

## Description

### FIELD

The present disclosure relates to a formation device and method for a secondary battery.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The formation process of a secondary battery is a step of activating and stabilizing the initial performance of the battery during the battery manufacturing process. The formation process is performed during the initial charging and discharging of the secondary battery, and the function of the battery is optimized as ions are intercalated and de-intercalated in the electrode by the formation process. In addition, a Solid Electrolyte Interface (SEI) layer is formed during the formation process, and the SEI layer protects the electrode between the electrode and the electrolyte to determine the lifespan and performance of the battery.

The herein information disclosed in this Background section is for enhancement of understanding of the background of the present disclosure, and therefore, it may contain information that does not constitute related (or prior) art.

### SUMMARY

The present disclosure provides a formation device and method for a secondary battery.

However, the technical problem to be solved by the present disclosure is not limited to the herein problem, and other problems not mentioned herein, and aspects and features of the present disclosure that would address such problems, will be clearly understood by those skilled in the art from the description of the present disclosure herein.

According to an aspect of the present disclosure for solving the technical problem, a formation device for a secondary battery includes a temperature controller for controlling a temperature of the secondary battery, a temperature sensor for measuring the temperature of the secondary battery, a charging/discharging unit including a probe contacting a terminal of the secondary battery, a vacuum tube for removing gas inside the secondary battery, and a controller for charging the secondary battery until a state of charge of the secondary battery reaches a termination capacity, wherein the controller controls the temperature controller to maintain a set temperature range for the temperature of the secondary battery measured by the temperature sensor during the charging, and controls the vacuum tube during the charging, and wherein the termination capacity may be 40 %-90 %.

According to embodiments of the present disclosure, the temperature range may be 35 °C-65 °C.

According to embodiments of the present disclosure, the secondary battery is loaded on a tray, and the temperature controller may include a heating part for heating the tray.

According to embodiments of the present disclosure, the temperature controller may include a fan for blowing cool air toward the tray.

According to embodiments of the present disclosure, the probe may include a first probe contacting a first terminal electrically connected to a first electrode of the secondary battery and a second probe contacting a second terminal electrically connected to a second electrode of the secondary battery, the temperature sensor may be connected to the first probe or the second probe, and the vacuum tube may contact an electrolyte injection port of the secondary battery.

According to embodiments of the present disclosure, an inside of the vacuum tube may be in a negative pressure state.

According to embodiments of the present disclosure, the controller may control the charging/discharging unit to charge the secondary battery at a C-rate of 0.2 C-1.2 C until the state of charge of the secondary battery reaches the termination capacity.

According to embodiments of the present disclosure, the controller may control the charging/discharging unit to charge the secondary battery a plurality of times at different C-rates during the charging.

According to an aspect of the present disclosure for solving the technical problem, a formation method for a secondary battery includes a preheating step of preheating the secondary battery, a charging step of charging the secondary battery until a state of charge (SOC) of the secondary battery reaches a termination capacity (%), a temperature control step of maintaining the secondary battery at a set temperature range until the state of charge (SOC) of the secondary battery reaches the termination capacity (%), and a degassing step of removing gas inside the secondary battery, wherein the charging step, the temperature control step, and the degassing step are performed in parallel, and wherein the termination capacity may be 40 %-90 %.

According to embodiments of the present disclosure, the temperature range may be 35 °C-65 °C.

According to embodiments of the present disclosure, the formation method for the secondary battery may further include a pre-aging step of injecting an electrolyte into the secondary battery and leaving the secondary battery as is, before the preheating step.

According to embodiments of the present disclosure, in the preheating step, the secondary battery may be preheated until the temperature of the secondary battery reaches 35 °C-65 °C.

According to embodiments of the present disclosure, the preheating step may include a step of stacking trays on which the secondary batteries are loaded and putting the trays into a preheater, a step of connecting the trays and a heat supply part of the preheater, and a step of preheating the trays to a predetermined specific temperature within 35 °C-65 °C.

According to embodiments of the present disclosure, in the charging step, the secondary battery may be charged within a voltage range of 0.1 V-4.5 V.

According to embodiments of the present disclosure, in the temperature control step, heating may be performed by heating the tray on which the secondary battery is loaded, and cooling may be performed by blowing cool air toward the tray.

According to embodiments of the present disclosure, the tray may include a heating plate mounted on a lower part thereof, and the temperature control may be performed by a temperature increase of the heating plate.

According to embodiments of the present disclosure, in the degassing step, gas inside the secondary battery may be removed by bringing a vacuum tube into contact with an electrolyte injection port of the secondary battery, and the inside of the vacuum tube may be in a negative pressure state.

According to embodiments of the present disclosure, the formation method for the secondary battery may further include a step of releasing the vacuum tube from the electrolyte injection port and sealing the electrolyte injection port, after the degassing step.

According to embodiments of the present disclosure, the formation method for the secondary battery may further include a step of transferring the secondary battery to a formation device, between the preheating step and the charging step.

According to embodiments of the present disclosure, in the charging step, the secondary battery may be charged a plurality of times at different C-rates within a range of 0.2 C-1.2 C until the state of charge of the secondary battery reaches the termination capacity.

According to some embodiments of the present disclosure, gas generation of an electrode material at a high temperature can be maximized and the gas can be maximally removed by a formation device and method for degassing while charging a secondary battery at a high rate under high-temperature conditions. Accordingly, byproduct generation due to a side reaction inside the secondary battery is suppressed and the quality of the battery may be improved.

According to some embodiments of the present disclosure, a stable film can be formed on the electrode surface by reducing mechanical or electrochemical stress received by the electrode through high-rate charging, and accordingly, a secondary battery having a stable structure can be produced.

According to some embodiments of the present disclosure, the charging step, the temperature control step, and the degassing step are performed in parallel in a single device, so that the production efficiency of the secondary battery may be improved through the simplification of the formation process.

According to some embodiments of the present disclosure, the lifespan characteristics, performance, and quality of a secondary battery produced by the formation device and method for degassing while charging the secondary battery at a high rate under high-temperature conditions may be improved.

However, aspects and features of the present disclosure are not limited to those described herein, and other aspects and features not mentioned will be clearly understood by a person skilled in the art from the detailed description, described herein.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a schematic diagram of a formation device according to embodiments of the present disclosure.
FIG. 2 is a flowchart illustrating a formation method according to embodiments of the present disclosure.
FIG. 3 is a charging recipe table showing a charging process performed in a formation device according to embodiments of the present disclosure by step.
FIG. 4 is a time-voltage graph for explaining an operation method of a formation device and a formation method according to embodiments of the present disclosure.
FIG. 5 is a schematic diagram of a tray according to embodiments of the present disclosure.
FIG. 6 is a graph showing a result of evaluating a change in internal pressure of a secondary battery that has undergone formation.
FIG. 7 is a graph showing a result of evaluating a change in thickness of a secondary battery that has undergone formation.
FIG. 8 is an XPS graph showing a surface analysis result of a cathode material of a secondary battery.
FIG. 9 is a graph showing a result of evaluating a crystal structure of a cathode material of a secondary battery by Raman spectroscopy.
FIG. 10 is a graph showing a result of an XRD analysis of a cathode material of a secondary battery.
FIG. 11 is a diagram showing a result of evaluating lifespan characteristics according to charging and discharging of a secondary battery that has undergone formation.
FIG. 12 is a diagram showing a result of evaluating an internal resistance according to a charging and discharging lifespan of a secondary battery that has undergone formation.
FIG. 13 is a diagram showing a result of evaluating a capacity according to a storage time of a secondary battery that has undergone formation.
FIG. 14 is a diagram showing a result of evaluating an internal resistance according to a storage time of a secondary battery that has undergone formation.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing an example of the present disclosure and are not intended to limit the present disclosure.

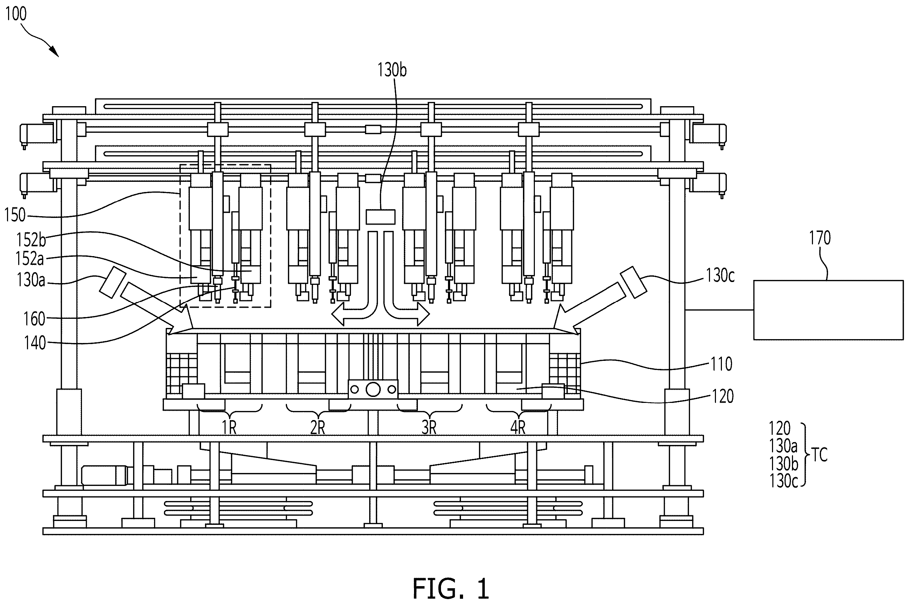

FIG. 1 is a schematic diagram of a formation device according to embodiments of the present disclosure.

A formation device 100 for a secondary battery according to embodiments of the present disclosure may include a temperature controller TC for controlling a temperature of the secondary battery, a temperature sensor 140 for measuring the temperature of the secondary battery, a charging/discharging unit 150, a vacuum tube 160 for removing gas inside the secondary battery, and a controller 170.

A formation process using the formation device 100 may be performed efficiently by using an automated system that can handle a plurality of secondary batteries at once. The formation device 100 may precisely control the voltage, current, and temperature of each secondary battery. This allows the formation device 100 to minimize imbalance between the secondary batteries and reduce an initial defect rate.

For example, as shown in FIG. 1, a tray 110 is composed of four rows (1R, 2R, 3R, 4R) and may hold 24 secondary batteries in each row. Therefore, one formation device 100 may form a total of 96 secondary batteries at once. In this case, the charging/discharging unit 150, the temperature sensor 140, and the vacuum tube 160 in the formation device 100 may be disposed in four rows.

In the present disclosure, an prismatic secondary battery is described as an example of the secondary battery, but the present disclosure is not limited thereto, and the secondary battery may be a cylindrical battery, a pouch-type battery, a coin-type battery, or a pin-type battery. In FIG. 1, the formation device 100 for a prismatic secondary battery is shown, but for a formation device for other types of secondary batteries, the detailed structure of the device may differ depending on the location of a terminal, an electrolyte injection port, and the like of the secondary battery and the shape of the case.

Referring to FIG. 1, a charging/discharging unit 150 according to embodiments may include probes 152a, 152b. The probes 152a, 152b may include a first probe 152a contacting a first terminal electrically connected to a first electrode of the secondary battery and a second probe 152b contacting a second terminal electrically connected to a second electrode of the secondary battery. When the first electrode is a cathode and the second electrode is an anode, the first terminal may be a cathode terminal and the second terminal may be an anode terminal. Or, when the first electrode is an anode and the second electrode is a cathode, the first terminal may be an anode terminal and the second terminal may be a cathode terminal.

A terminal of the secondary battery may be exposed to the outside of the case and may be in contact or connected to the probes 152a, 152b. The terminal of the secondary battery may be electrically connected to an electrode included in the electrode assembly housed inside the case of the secondary battery through an electrode tab or an electrode lead.

The probes 152a, 152b may connect the charging/discharging unit 150 and the secondary battery through a connection with the terminal of the secondary battery to supply or recover current and voltage to or from the secondary battery. In addition, the probes 152a, 152b may measure the voltage, current, etc. of the secondary battery in real time and transmit data to a control system. In addition, the probes 152a, 152b may monitor a state of the secondary battery in real time to detect situations such as overcharging, overdischarging, overheating, etc., and safely control the charging/discharging unit 150.

A charging/discharging unit 150 according to embodiments may further include a charging/discharging circuit, a power supply unit, a control system, a data collection and monitoring device, etc. The power supply unit may be a device that supplies current to the secondary battery or recovers current from the secondary battery. For example, the power supply unit may supply a constant current or voltage during charging, and may recover a constant current or voltage during discharging. The power supply unit may operate in a CC (Constant Current) and a CV (Constant Voltage) mode to execute various charging/discharging patterns.

The control system of the charging/discharging unit 150 may be a system for monitoring and controlling a voltage, a current, etc. in real time during a charging/discharging process. The control system may automatically adjust the charging/discharging process according to a state of the secondary battery, and may minimize damage to the secondary battery by preventing overcharging or overdischarging. The control system may be software for controlling charging/discharging and visually displaying data. This allows a user to monitor a charging/discharging state of the secondary battery and manage a charging/discharging process. In addition, various charging/discharging conditions can be set. The charging/discharging conditions according to embodiments will be described later.

The data collection and monitoring device of the charging/discharging unit 150 may be a system that collects and analyzes data generated during charging/discharging. For example, the data collection and monitoring device may evaluate a performance of the secondary battery by recording various parameters such as a voltage, a current, a charging capacity, a discharging capacity, etc., in real time.

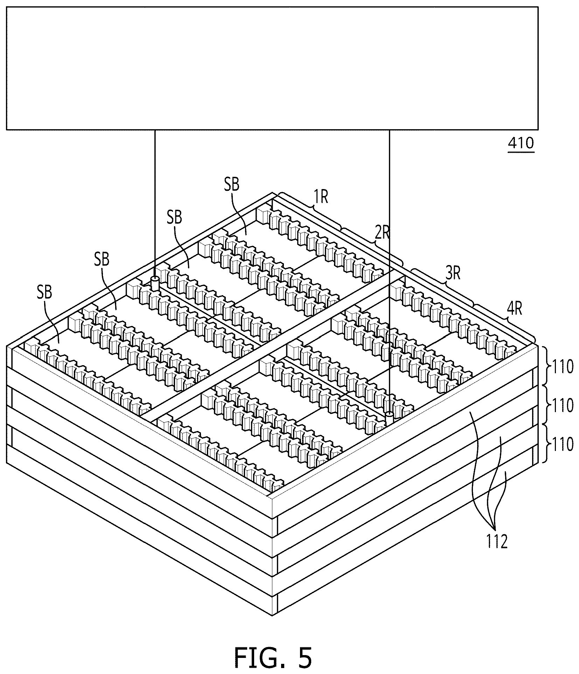

A temperature controller TC according to embodiments may include a heating part 120 for heating a tray 110 on which a secondary battery is loaded. The tray 110 may provide a storage space in which a plurality of secondary batteries may be loaded. The heating part 120 may increase the temperature of the secondary battery by heating the tray 110. The heating part 120 may be disposed at a bottom of the tray 110 to uniformly heat the loaded secondary battery. The characteristics of the heating part 120 will be described later with reference to FIG. 5.

The temperature controller TC may further include cooling parts 130a, 130b, 130c for cooling the tray 110. For example, as shown in FIG. 1, the cooling parts 130a, 130b, 130c may include a fan for blowing cool air toward the tray 110. The fan may include a first fan 130a, a second fan 130b, and a third fan 130c so as to uniformly cool the entire tray 110. However, the present disclosure is not limited thereto, and a fan having various numbers and positions may be used.

Referring to FIG. 1, the first fan 130a is configured to blow cool air in a direction toward the tray 110 from an upper left side of the tray 110, the second fan 130b is configured to blow cool air in a direction toward the tray 110 from an upper center of the tray 110, and the third fan 130c may be configured to blow cool air in a direction toward the tray 110 from an upper right side of the tray 110. However, the present disclosure is not limited thereto, and a cool air blowing direction of each fan may be variable depending on a fan installation position.

A temperature controller TC according to embodiments may be a device that controls heat generated during a charging/discharging process of a secondary battery. The temperature controller TC may be driven by software that controls a heating part 120 and cooling parts 130a, 130b, 130c to maintain the temperature of the secondary battery at a temperature set by a user. The temperature controller TC may control a temperature change of the secondary battery so as not to be large during charging/discharging in order to improve a performance and lifespan characteristics of the secondary battery.

A temperature sensor 140 may measure the temperature of the secondary battery during a charging/discharging process. A temperature sensor 140 according to embodiments may be connected to a first probe 152a or a second probe 152b of the charging/discharging unit 150, as shown in FIG. 1. Therefore, when the probes 152a, 152b lower or the tray 110 rises to bring the probes 152a, 152b into contact with a terminal of the secondary battery, the temperature sensor 140 connected to the probes 152a, 152b may measure the temperature by directly contacting a surface or an inside of the secondary battery. When the temperature is measured by directly contacting the surface or the inside of the secondary battery, the accurate temperature of the surface or the inside of the secondary battery may be precisely measured. However, a temperature measurement method of the temperature sensor 140 is not limited thereto, and the temperature sensor 140 may be a non-contact sensor.

Inembodiments, a vacuum tube 160 may be in contact or connected to an electrolyte injection port of the secondary battery to remove gas inside the secondary battery. An inside of the vacuum tube 160 may be in a negative pressure state to maximally remove gas generated inside the secondary battery during a charging/discharging process. The vacuum tube 160 may be disposed in a position where the vacuum tube 160 can be easily connected to the electrolyte injection port of the secondary battery. For example, as shown in FIG. 1, the vacuum tube 160 may be disposed between the first probe 152a and the second probe 152b which are disposed at a position where the vacuum tube 160 can be easily connected to a terminal of the secondary battery (e.g., above the terminal). The vacuum tube 160 may be directly connected to the probes 152a, 152b of the charging/discharging unit 150. Or, the vacuum tube 160 may be indirectly connected to the probes 152a, 152b of the charging/discharging unit 150 through the controller 170.

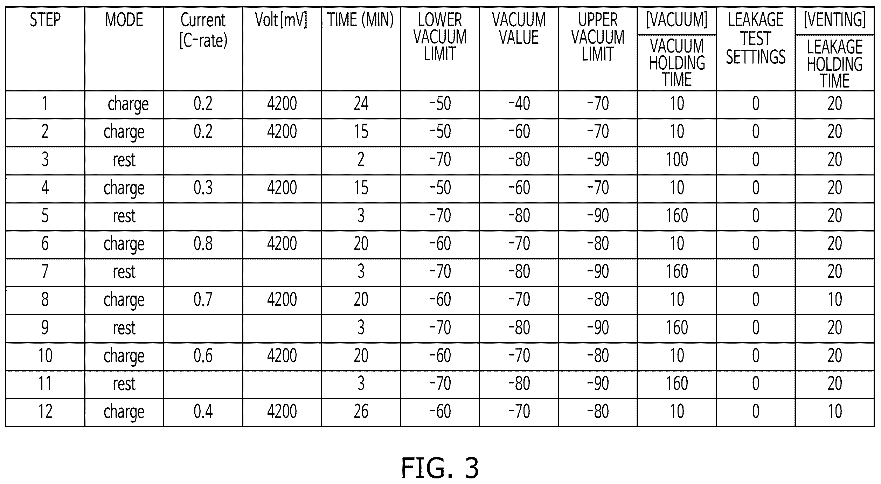

In embodiments, the vacuum tube 160 may further include a reflux electrolyte storage part for temporarily collecting an electrolyte solution that flows back through the electrolyte injection port during a vacuum and venting process that is repeatedly performed in a degassing step. The electrolyte solution that has flowed back during the vacuum is stored in the storage part, and in the venting step, the electrolyte solution is re-injected into the electrolyte injection port through a re-injection path, thereby preventing electrolyte solution loss. This configuration can maintain electrolyte solution stability inside the secondary battery even during a repeated vacuum and venting process during a charging step and a rest step, and as shown in FIG. 3, gas removal through the vacuum tube 160 and reflux electrolyte solution re-injection may be performed in parallel in a total of 12 steps including charging and rest.

In embodiments, a controller 170 may control a charging/discharging unit 150 to charge a secondary battery at a C-rate of 0.2 C-1.2 C until a state of charge (SOC) of the secondary battery reaches a predetermined termination capacity (%), from 0 % (or an initial state before charging of the secondary battery). In parallel with this, the controller 170 may control a temperature controller TC to maintain a set temperature range for a temperature of the secondary battery measured by a temperature sensor 140 during charging until the SOC reaches the termination capacity from 0 %. In parallel with this, the controller 170 may control a vacuum tube so that the vacuum tube may continuously be in a negative pressure state during charging until the SOC reaches the termination capacity from 0 %. This allows gas generated inside the secondary battery according to charging to be continuously removed during the charging in the SOC charging section.

The set temperature range described herein may be 35 °C-65 °C. Or, the set temperature range may be 35 °C-45 °C, 40 °C-50 °C, 45 °C-55 °C, 50 °C-60 °C, or 55 °C-65 °C. However, the set temperature range is not limited thereto and may be changed according to a design and a surrounding environment.

The termination capacity (%) described herein may be 40 %-90 %. A user may pre-input any value within the range to the controller 170 as the termination capacity. In this case, the controller 170 may transmit the signal to a control system in the charging/discharging unit 150 to control charging so that charging can proceed only up to the predetermined specific termination capacity.

The range of the termination capacity may vary depending on an electrode material inside the secondary battery. An amount of gas that can be generated during charging and discharging may vary for each electrode material. In a case of an electrode material for which a small amount of gas can be generated, the termination capacity can be set low since a small amount of gas is to be removed. Or, in a case of an electrode material for which a large rate of thickness change occurs during charging and discharging, the termination capacity may be set low to minimize stress received by an electrode. For example, in a case of an anode material including silicon for which a large rate of thickness change occurs during charging and discharging, the termination capacity may be set to about 80 %.

In embodiments, a controller 170 may control a charging/discharging unit 150 to initiate charging of a secondary battery when a temperature of the secondary battery is within the set temperature range described herein, and when the temperature of the secondary battery is less than a minimum value of the set temperature range, the controller 170 may activate a temperature controller TC to cause the temperature of the secondary battery to reach the minimum value and then initiate charging of the secondary battery.

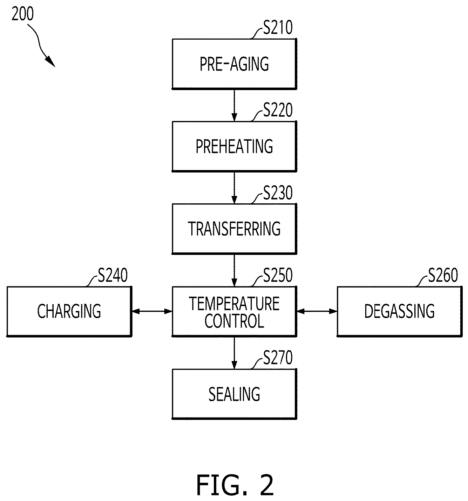

FIG. 2 is a flowchart illustrating a formation method according to embodiments of the present disclosure.

A flowchart of FIG. 2 and a description herein are only an example of the present disclosure, and the scope of the present disclosure is not limited to the flowchart of FIG. 2 and the description herein. For example, one or more steps in the flowchart and the description herein may be added/changed/deleted, an order of one or more steps may be changed, and one or more steps may be performed at the same time.

Referring to FIG. 2, a formation method 200 for a secondary battery according to embodiments may be initiated with a preheating step S220 of preheating the secondary battery. Or, the formation method 200 may be initiated with a pre-aging step S210 of injecting an electrolyte into the secondary battery and leaving the secondary battery as is, before the preheating step S220. An electrolyte may be injected through an electrolyte injection port of the secondary battery, and the secondary battery may be left as is for a predetermined period of time so that an electrode and a separator can be sufficiently wet with the electrolyte. The pre-aging step S210 can improve contact between an electrode surface and the electrolyte as the electrolyte sufficiently permeates into an electrode material.

The pre-aging step S210 may be performed in a low-temperature range of about 20 °C-30 °C to slowly advance an internal reaction of the secondary battery. However, a pre-aging temperature is not limited thereto and may vary depending on a design or a required performance of a secondary battery manufacturing method, and for example, the pre-aging step may proceed at less than or equal to 15 °C according to specific conditions.

In a preheating step S220, a secondary battery may be preheated until a temperature of the secondary battery reaches the set temperature range described herein, for example, 35 °C-65 °C. The secondary battery may be preheated at a specific temperature before charging to ensure temperature uniformity. In addition, preheating can activate an electrode active material inside the secondary battery and reduce thermal shock that may occur during charging. This can reduce an increase in stress and a change in volume that may occur during initial charging. The preheating step S220 may be performed in a preheating room separate from a formation device (hereinafter, a formation device) described with reference to FIG. 1. A specific preheating method will be described later with reference to FIG. 5.

After that, a step S230 of transferring the secondary battery to a formation device may be performed. In the transfer step S230, the tray, which has been preheated in the preheating step S220, can be transferred as is to enhance the process efficiency. In embodiments, the transfer step S230 may be performed by an automatic transfer system to transfer the tray to the formation device. The automatic transfer system may operate with devices such as a conveyor belt, a robot arm, or an AGV (Automated Guided Vehicle).

In the transfer step S230, the transfer path and environment can be maintained such that the temperature, humidity, and other conditions remain constant, so that the temperature of the secondary battery in the tray does not fluctuate. For example, the temperature of the secondary battery in the tray can be continuously monitored by the temperature sensors and monitoring system of the transfer section, allowing immediate action if a temperature fluctuation is detected.

The transferred tray may be precisely loaded into a slot or a rack system of a formation device. For example, transfer and loading of the tray may be performed with minimized vibration and impact of the secondary battery by an automated loading system so that the secondary battery is not damaged.

After that, a charging step S240, a temperature control step S250, and a degassing step S260 may be performed in parallel.

The charging step S240 may include a step of charging a secondary battery at a C-rate of 0.2 C-1.2 C until a state of charge (SOC) of the secondary battery reaches a predetermined termination capacity (%) from 0 %. A charging step S240 according to embodiments may include a step of charging the secondary battery once at a specific C-rate within the C-rate range described herein, or charging the secondary battery a plurality of times at different C-rates within the C-rate range described herein. At this time, the termination capacity may be 40 %-90 %.

In a charging step S240, when a temperature of a secondary battery is within the set temperature range described herein (e.g., 35 °C-65 °C), charging of the secondary battery is initiated, and when the temperature of the secondary battery is less than a minimum value of the set temperature range, charging of the secondary battery may be initiated after heating the secondary battery to reach the minimum value.

A temperature control step S250 may include a step of maintaining a secondary battery at the set temperature range described herein (e.g., 35 °C-65 °C) until a state of charge (SOC) of the secondary battery reaches a termination capacity (%) from 0 %. At this time, the termination capacity may be 40 %-90 %. As described herein with reference to FIG. 1, heating may be performed by heating a tray on which a secondary battery is loaded, and cooling may be performed by blowing cool air toward the tray.

A degassing step S260 is a step of removing gas inside a secondary battery, and the degassing step may be performed in an entire section of charging from a SOC of 0 % to when the SOC reaches a termination capacity. This allows gas generated at a high temperature in a charging step to be removed as soon as the gas is generated, so that the gas can be maximally removed. In the degassing step S260, gas inside the secondary battery is removed by bringing a vacuum tube (e.g., 160 of FIG. 1) into contact with an electrolyte injection port of the secondary battery, and an inside of the vacuum tube may be in a negative pressure state. The inside of the vacuum tube may be maintained in a negative pressure state in an entire section of charging from a SOC of 0 % of the secondary battery to when the SOC reaches the termination capacity.

After the degassing step S260, a step S270 of releasing the vacuum tube from the electrolyte injection port of the secondary battery and sealing the electrolyte injection port may be performed. In addition, welding, heat sealing, or coupling may be adopted as a method for sealing the electrolyte injection port. Or, a separate sealing member for sealing may be used. For example, a process of sealing the electrolyte injection port with a pin-type stopper may be performed. However, a stopper for sealing the electrolyte injection port is not limited thereto, and for example, a ball-type stopper may be used.

FIG. 3 is a charging recipe table showing a charging process performed in a formation device according to embodiments of the present disclosure by step.

FIG. 3 is a table showing an example of an operation of a vacuum tube performed in a formation device according to embodiments. In the present embodiment, the vacuum tube described herein in FIG. 1 (e.g., 160 of FIG. 1) may further include a reflux electrolyte storage part (hereinafter, a "storage part") for preventing and storing backflow of an electrolyte solution that occurs inside while removing internal gas by contacting an electrolyte injection port of a secondary battery during a degassing step.

In embodiments, a degassing step is performed in parallel with a charging step and a temperature control step, and in the present embodiment, as shown in FIG. 3, a vacuum and venting may be repeatedly performed during a charging step ("charge") and a rest step ("rest"). "MODE" in the recipe table indicates a charging step or a rest step, and means "charge" and "rest," respectively. "Current (C-rate)" indicates a ratio of a charging current (C-rate), and a C-rate means a ratio of a charging current to a rated capacity of a battery (e.g., 0.2 C means charging at 20 % of the rated capacity). In addition, "Volt[mV]" indicates a set value for a charging voltage. "Time [min]" indicates a time of the step in minutes. In the table, "Lower vacuum limit," "Vacuum value," and "Upper vacuum limit " are set vacuum pressure values (in kPa) in a vacuum tube by step, and a vacuum may be maintained based on the values under control of a controller (e.g., 170 of FIG. 1). Here, "Lower vacuum limit" is a lower limit reference pressure at the beginning of a vacuum operation, and "Upper vacuum limit" is an upper limit reference pressure during the vacuum operation. "Vacuum value" indicates a target vacuum holding pressure. In the table, "[Vacuum] Vacuum holding time" is a time for holding a vacuum value in seconds, and "[Venting] Leakage holding time" indicates a stabilization time after releasing a vacuum in a venting step, and is also shown in seconds.

In embodiments, a vacuum tube may maintain set vacuum conditions during a vacuum holding time by step, and then perform a vacuum release in a venting step. In an example, an electrolyte solution that has flowed back through an electrolyte injection port during a vacuum process is temporarily collected in a reflux electrolyte storage part, and after that, the electrolyte solution may be re-injected (refluxed) into the electrolyte injection port through a re-injection pipe in a venting step.

This configuration can prevent electrolyte solution loss even in a repeated vacuum and/or venting process, and can ensure internal electrolyte solution holding stability of a secondary battery. In embodiments, a vacuum and reflux electrolyte solution re-injection may be repeatedly performed in a total of 12 steps covering charging and rest sections (steps 1-12). More specifically, as shown in FIG. 3, a vacuum holding time and a venting holding time are set for each step, and after maintaining a set vacuum value during a vacuum, a reflux electrolyte solution is collected into a storage part through a venting step and then may be re-injected. However, the present disclosure is not limited thereto, and a vacuum and venting process may also be performed using only a vacuum tube without a storage part. For example, in a case where a fall or natural return of a reflux electrolyte solution is possible through a structure or an internal path in a vacuum tube, the reflux electrolyte solution may be re-injected in a venting step without a separate storage part.

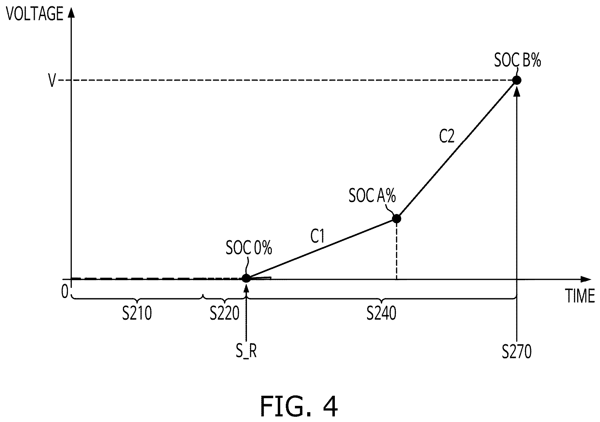

FIG. 4 is a time-voltage graph for explaining an operation method of a formation device and a formation method according to embodiments of the present disclosure. FIG. 4 is a graph for explaining a voltage, a state of charge, and a C-rate in a pre-aging step S210, a preheating step S220, a charging step S240, and a sealing step S270 among the steps of the formation method for a secondary battery described with reference to FIG. 2.

A pre-aging step S210 according to embodiments may proceed at room temperature for about 12-48 hours. After that, a preheating step S220 may proceed by loading a secondary battery on a tray. After the preheating step S220 is completed, sealing of the secondary battery may be removed S_R. In a sealing removal step S_R for initiating charging of the secondary battery, a voltage may be 0 V and an SOC may be 0 %. The sealing removal step S_R may be a step for initiating a degassing step by bringing a vacuum tube into contact with an electrolyte injection port.

In a charging step S240 according to embodiments, a secondary battery may be charged within a voltage range of 0.1 V-4.5 V.

In addition, in a charging step S240 until a SOC of a secondary battery reaches a predetermined termination capacity (%) from 0 %, the secondary battery may be charged so that a C-rate is 0.2 C-1.2 C. Here, the predetermined termination capacity (SOC B%) may be 40 %-90 %.

A charging step S240 according to embodiments may include a step of charging a secondary battery once at a specific C-rate, or charging the secondary battery a plurality of times at different C-rates. For example, referring to FIG. 4, the charging step S240 may be performed in an order of a step C1 of charging for a predetermined period of time at a C-rate of 0.2 C-0.5 C and a step C2 of charging for a predetermined period of time at a C-rate of 0.5 C-1.2 C. However, a C-rate of each charging section and a number of charging sections are not limited thereto, and the secondary battery may be charged several times at different C-rates within a range of 0.2 C-1.2 C.

An SOC range or a termination capacity (e.g., SOC A%, SOC B%, etc.) of a specific step of charging for a predetermined period of time at a specific C-rate may vary depending on a design such as an electrode material, a capacity, a degree of heat generation, etc. of a secondary battery.

In a charging step S240 according to embodiments, when charging proceeds at a C-rate of 0.2 C-1.2 C, and a maximum C-rate is performed at a high rate of 1.2 C, mechanical or electrochemical stress received by an electrode can be reduced. Accordingly, a stable film can be formed on the electrode surface, and a secondary battery having a stable structure can be produced.

Specifically, compared with a formation method in which the charging step S240 described herein is divided into a pre-charging section performed at a very low rate (e.g., 0.05 C-0.2 C) in a low-voltage area (e.g., less than or equal to 3.4 V) for an additive decomposition reaction inside a secondary battery, and a charging section charged within a voltage range of, for example, 3.4 V-4.3 V for film formation on an electrode surface, the pre-charging section and the charging section are replaced with a single step, and gas inside the secondary battery can be more effectively generated and removed as high-temperature (e.g., 35 °C-65 °C) charging proceeds at a high rate of a maximum of 1.2 C in the step, and a film on the electrode surface can be formed more densely.

A film may include a solid electrolyte interphase (SEI) layer formed on an anode surface or a cathode electrolyte interphase (CEI) layer formed on a cathode surface during the initial charging of a secondary battery. The SEI layer allows ions originating from a cathode to move easily but can reduce gas generation by preventing the further decomposition of electrolytes. The SEI layer can maintain the stability of an electrode by controlling the reaction of ions on the anode surface. The CEI layer is generated from a side reaction between the electrolyte and the cathode, and particularly in high-voltage operation of a secondary battery, it suppresses further decomposition of the electrolyte on the cathode surface, thus ensuring long-term stability of the battery at high voltage, and improved performance can be ensured by preventing the electrode's capacity degradation.

When charging proceeds at a high rate (e.g., 0.2 C-1.2 C) at once, stress received by an electrode is reduced compared with a case where charging and discharging are performed at a low rate (e.g., 0.05 C-0.2 C) for a long period of time, and inherent gas can be maximally generated. In this case, a degree to which a large amount of progressive gas is generated in a use step after manufacturing a secondary battery including an electrode that has undergone charging at a high rate at once is reduced, and a performance of the secondary battery may be improved.

FIG. 5 is a schematic diagram of a tray according to embodiments of the present disclosure. FIG. 5 is a diagram for explaining a tray and a heating part described with reference to FIG. 1 and an implementation example of a preheating step described with reference to FIG. 2.

In embodiments, a tray 110 on which a plurality of secondary batteries SR are loaded may include a heating plate 112 mounted on a lower part thereof. However, the present disclosure is not limited thereto, and any configuration that can uniformly heat a secondary battery SR loaded therein can be adopted as the heating plate 112. For example, the heating plate 112 may be configured in a form where a heating wire is disposed on an entire surface contacting a secondary battery SR.

As another example, a heating part 120 may be separately disposed in a peripheral part of a tray 110 to uniformly heat a loaded secondary battery. For example, the heating part 120 may be disposed on at least one of a side surface or a lower surface of the tray 110 to uniformly heat a loaded secondary battery. However, the present disclosure is not limited thereto, and various configurations for heating a secondary battery may be adopted.

Temperature control by a controller of a temperature controller described with reference to FIG. 1 and temperature control in a temperature control step S250 described with reference to FIG. 2 may be performed by a temperature increase of a heating plate 112.

In a preheating step S220 described with reference to FIG. 2, a temperature of a secondary battery may be increased up to a predetermined temperature by connecting a tray 110 on which a secondary battery SR that has undergone a pre-aging step is loaded to a preheater 410. When a temperature of the secondary battery SR reaches a predetermined temperature (e.g., 35 °C-65 °C), a connection between the tray 110 and the preheater 410 may be released. Referring to FIG. 5, in embodiments, one tray 110 may load secondary batteries SR in four rows (1R, 2R, 3R, 4R), and a plurality of trays 110 may be stacked and connected to a single preheater 410 to proceed with a preheating step.

Unlike what is shown in FIG. 5, a preheater 410 includes a preheating room, and a tray 110 on which a secondary battery SR is loaded is put into the preheating room so that the secondary batteries SR can be uniformly preheated for a predetermined period of time. A preheating step according to embodiments may be performed in an order of a step of stacking trays 110 on which secondary batteries SR are loaded and putting the trays 110 into a preheater 410, a step of connecting a connector of the tray 110 and a heat supply part of the preheater 410, a step of preheating the trays to a predetermined specific temperature within a temperature range of 35 °C-65 °C, and a step of releasing a connection between the connector and the heat supply part when preheating is completed.

The preheating step as described herein can improve a formation process speed by increasing a temperature to a predetermined high-temperature condition (e.g., 35 °C-65 °C) before transferring and putting the secondary battery into a formation device.

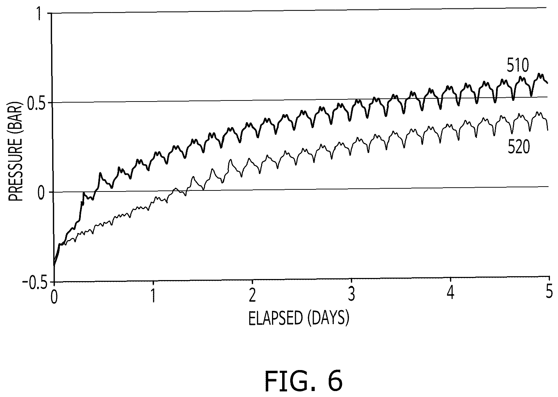

FIG. 6 is a graph showing a result of evaluating a change in internal pressure of a secondary battery that has undergone formation.

Hereinafter, a formation method according to a first example 510 may be performed in an order of a step of injecting an electrolyte into a prismatic secondary battery and loading the secondary battery on a tray, a step of proceeding with pre-aging and then transferring the tray to a charging/discharging facility, a step of charging/discharging the secondary battery in the charging/discharging facility, a step of transferring the tray to an aging room and leaving the tray as is, a step of removing gas inside the secondary battery, and a step of sealing an electrolyte injection port.

A formation method according to a second example 520 may be performed by the formation device and method described herein. Hereinafter, a formation method according to a second example 520 may be performed in an order of a step of injecting an electrolyte into a prismatic secondary battery and loading the secondary battery on a tray, a step of proceeding with pre-aging and then aging the secondary battery in a preheater, a step of transferring the tray to a formation device described with reference to FIG. 1, a step of operating a heating plate mounted on a lower part of the tray and a fan installed above the tray to maintain the secondary battery at the set temperature range described herein while charging/discharging the secondary battery, a step of bringing a vacuum tube into contact with an electrolyte injection port to remove gas, and a step of sealing the electrolyte injection port.

In a graph of FIG. 6, an x-axis indicates a number of days (days) of use (charging/discharging) of a secondary battery that has undergone formation, and a y-axis indicates a result of measuring an internal pressure of the secondary battery with a pressure sensor. A condition for evaluating an internal pressure of a secondary battery was a CC/CV charging method in which a charging is performed at a C-rate of 0.2 C with 4.3 V as a full charging voltage, charging is performed at a constant current initially, and charging is performed at a constant voltage upon reaching 4.3 V. In addition, the secondary battery was discharged to 2.8 V, and a 10-minute rest period was put between charging and discharging to stabilize a reaction occurring inside the battery.

Referring to FIG. 6, it was confirmed that an internal pressure of a secondary battery that had undergone a formation method according to the second example 520 was lower than that of a secondary battery that had undergone a formation method according to the first example 510. This shows that an amount of gas generated according to a side reaction inside the secondary battery was smaller in the secondary battery that had undergone the formation method according to the second example than in the first example. As a result of analyzing a gas composition generated inside the secondary battery sample after 5 days, it was confirmed that the gas included carbon dioxide (CO2), methane (CH4), carbon monoxide (CO), and ethane (C2H6), and gas was generated at a concentration of about 16,000 ppm in the first example, whereas gas was generated at a concentration of about 10,000 ppm in the second example.

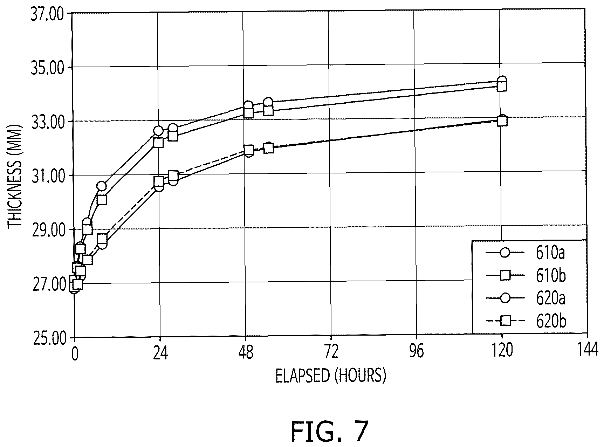

FIG. 7 is a graph showing a result of evaluating a change in thickness of a secondary battery that has undergone formation.

In a graph of FIG. 7, an x-axis indicates a passage of time (hours) of use (charging/discharging) of a secondary battery that has undergone formation, and a y-axis indicates a result of measuring a thickness (mm) of the secondary battery during the charging and discharging process. A condition for evaluating a thickness of a secondary battery was the same as the condition described in FIG. 6, except that the evaluation was performed at 60 °C without pressing the secondary battery.

Referring to FIG. 7, it was confirmed that a thickness of a secondary battery that had undergone a formation method according to a second example 620a, 620b was thinner than that of a secondary battery that had undergone a formation method according to a first example 610a, 610b. This is considered to be because a smaller side reaction occurred inside the secondary battery.

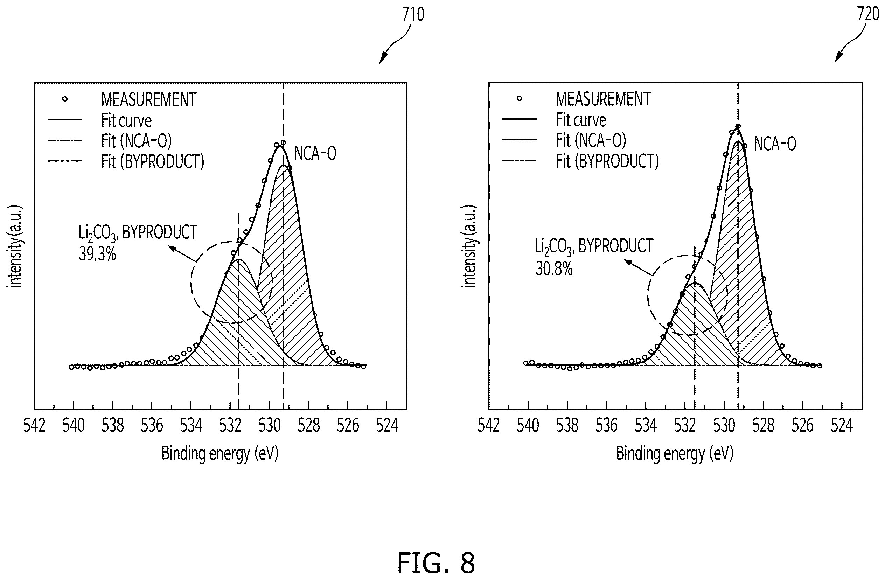

FIG. 8 is an XPS graph showing a surface analysis result of a cathode material of a secondary battery. A graph of FIG. 8 shows a result of analyzing components of a cathode surface of a secondary battery that has undergone formation by an XPS (X-ray Photoelectron Spectroscopy) analysis method through an intensity analysis according to a binding energy (eV). For the evaluation, NCA (Nickel Cobalt Aluminum Oxide, LiNi0.8Co0.1Al0.1O2), which is a high-nickel ternary cathode material, was used as a cathode.

Referring to FIG. 8, NCA-O peaks and Li2CO3 peaks appeared in the first example and the second example. An NCA-O peak means a peak of an oxide state of NCA. Lithium carbonate (Li2CO3) is a byproduct on a cathode surface generated as lithium ions and an electrolyte react, and can affect film formation. As a result of analyzing a Li2CO3 peak area, it was confirmed that an amount of lithium carbonate in the second example 720 was reduced by about 9% compared to the first example 710. This shows that a secondary battery that has undergone a formation method according to the second example 720 has a thinner thickness of a lithium carbonate and an organic/inorganic side reaction layer than a secondary battery that has undergone a formation method according to the first example 710, which is considered to be because a film formation reaction that consumes an electrolyte was reduced in the second example.

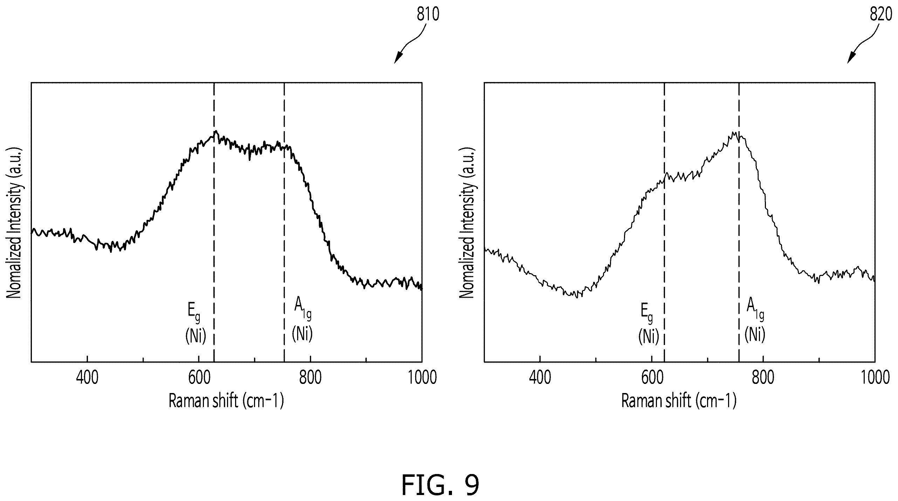

FIG. 9 is a graph showing a result of evaluating a crystal structure of a cathode material of a secondary battery by Raman spectroscopy. A graph of FIG. 9 shows a result of analyzing a cathode crystal structure of a secondary battery that has undergone formation by a Raman spectroscopy method through a spectrum analysis according to a Raman shift (cm-1). NCA was used as a cathode for the evaluation.

Referring to FIG. 9, an Alg(Ni) vibration mode peak appearing at about 600 cm-1 appeared more clearly in the second example 820 than in the first example 810. This shows that a layered structure of NCA was better maintained and less rock-salt structure formation was observed in the second example 820 than in the first example 810. A secondary battery including a cathode with a lot of rock-salt structures means that the secondary battery is deteriorated and has become an irreversible state where no further reaction is possible. Referring to FIG. 9, it was confirmed that rock-salt structures were lesser in the second example 820 than in the first example 810, which shows that an internal resistance of the secondary battery was further reduced in the second example 820 and the secondary battery was superior in terms of performance.

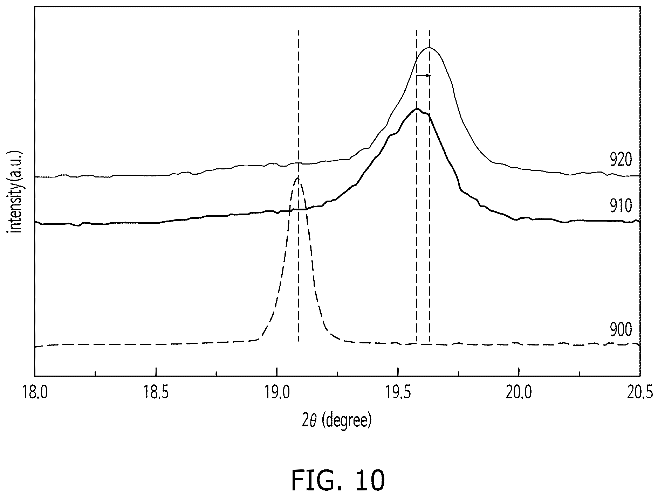

FIG. 10 is a graph showing a result of an XRD analysis of a cathode material of a secondary battery. A graph of FIG. 10 shows a result of analyzing a crystal structure of an atomic size of a cathode of a secondary battery that has undergone formation by an X-ray Diffraction analysis method through a spectrum analysis according to a diffraction angle (20). NCA was used as a cathode for the evaluation.

Referring to FIG. 10, an initial state example 900 shows a result of analyzing a cathode of a secondary battery that has not undergone formation, and a first example 910 and a second example 920 show a result of analyzing a cathode of a secondary battery to which the formation method described herein was applied from an initial state. Compared to the first example 910, a (003) peak indicating a peak of NCA appeared to the right in the second example 920, which confirmed that charging had proceeded slightly more. This means that an anode potential in the second example 920 is in a higher state than an anode potential in the first example 910. This confirmed that the second example 920 was superior in terms of charging/discharging efficiency since lithium ion consuming side reactions such as lithium precipitation from an anode were reduced compared to the first example 910.

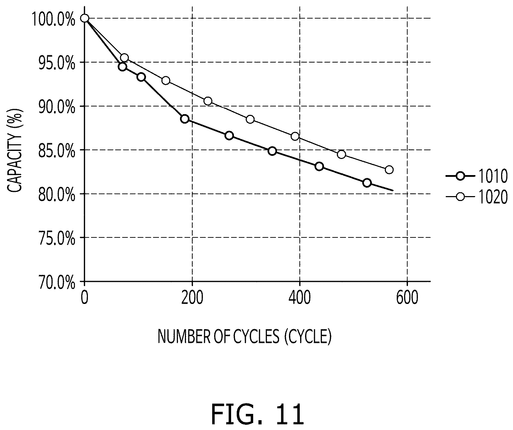

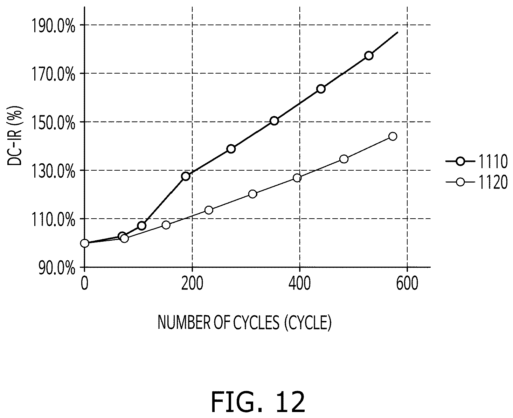

FIG. 11 is a diagram showing a result of evaluating lifespan characteristics according to charging and discharging of a secondary battery that has undergone formation. FIG. 12 is a diagram showing a result of evaluating an internal resistance according to a charging and discharging lifespan of a secondary battery that has undergone formation. FIG. 11 is a graph showing a result of evaluating a capacity retention rate by repeating charging and discharging with one charging and one discharging as one cycle. FIG. 12 is a graph showing a result of evaluating a direct current internal resistance (DC-IR) in a specific cycle. FIG. 12 is a graph showing a percentage of how much an internal resistance increases as a charging/discharging cycle proceeds, with an internal resistance in an initial state being set to 100%.

The evaluation was conducted on a secondary battery to which the formation method was applied at 45 °C, with charging and discharging each carried out at a C-rate of 0.5 C, within a voltage range of 2.8 V to 4.3 V.

Referring to FIG. 11, it was confirmed that a capacity retention rate up to about 580 cycles was higher in a secondary battery to which a formation method according to the second example 1020 was applied than in a secondary battery to which a formation method according to the first example 1010 was applied. Referring to FIG. 12, it was confirmed that an internal resistance up to about 580 cycles was lower in a secondary battery to which a formation method according to the second example 1120 was applied than in a secondary battery to which a formation method according to the first example 1110 was applied.

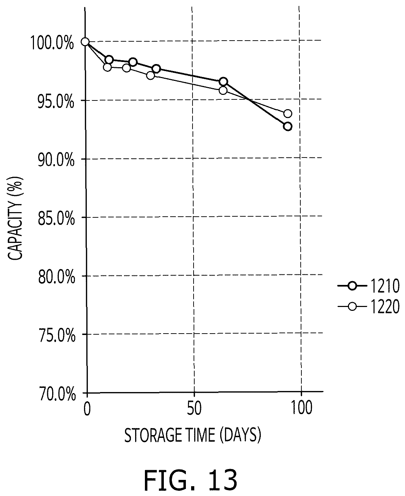

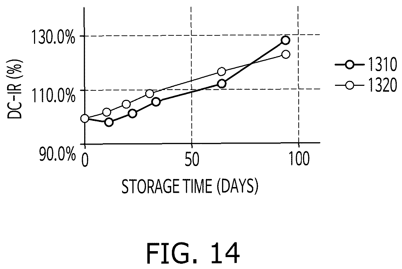

FIG. 13 is a diagram showing a result of evaluating a capacity according to a storage time of a secondary battery that has undergone formation. FIG. 14 is a diagram showing a result of evaluating an internal resistance according to a storage time of a secondary battery that has undergone formation. FIG. 13 is a graph showing a result of evaluating a capacity retention rate according to a storage time (days) by leaving a secondary battery that has undergone formation in a constant temperature room at 60 °C. FIG. 14 is a graph showing a result of evaluating a change in an internal resistance according to a storage time (days) by leaving a secondary battery that has undergone formation in a constant temperature room at 60 °C, which is the same as the evaluation in FIG. 13.

Referring to FIG. 13, it was confirmed that a capacity retention rate up to about 95 days was at a similar level in a secondary battery to which a formation method according to a second example 1220 was applied as in a secondary battery to which a formation method according to a first example 1210 was applied. Referring to FIG. 14, it was confirmed that an internal resistance up to about 95 days was at a similar level in a secondary battery to which a formation method according to a second example 1320 was applied as in a secondary battery to which a formation method according to a first example 1310 was applied.

This shows that a secondary battery that has undergone a formation method according to the second example is superior or at a similar level to a secondary battery that has undergone a formation method according to the first example in terms of lifespan characteristics and performance according to charging/discharging and storage, even if the secondary battery has undergone formation at a high temperature and a high rate.

Although the present disclosure has been described herein with respect to embodiments thereof, the present disclosure is not limited thereto.

## Claims

1. A formation device (100) for a secondary battery (SR) comprising:
a temperature controller (TC) for controlling a temperature of the secondary battery (SR);
a temperature sensor (140) for measuring the temperature of the secondary battery (SR);
a charging/discharging unit (150) comprising a probe (152a, 152b) contacting a terminal of the secondary battery (SR);
a vacuum tube (160) for removing gas inside the secondary battery (SR); and
a controller (170) for charging the secondary battery (SR) until a state of charge of the secondary battery (SR) reaches a termination capacity,
wherein the controller (170) controls the temperature controller (TC) to maintain a set temperature range for the temperature of the secondary battery (SR) measured by the temperature sensor (140) during the charging, and controls the vacuum tube (160) during the charging,
wherein the termination capacity is 40 %-90 %.

2. The formation device (100) for the secondary battery (SR) as claimed in claim 1, wherein the temperature range is 35 °C-65 °C.

3. The formation device (100) for the secondary battery (SR) as claimed in claim 1 or 2, wherein the secondary battery (SR) is loaded on a tray (110), and the temperature controller (TC) comprises a heating part (120) for heating the tray (110).

4. The formation device (100) for the secondary battery (SR) as claimed in claim 3, wherein the temperature controller (TC) comprises a fan (130a, 130b, 130c) for blowing cool air toward the tray (110).

5. The formation device (100) for the secondary battery (SR) as claimed in any one of the preceding claims, wherein the probe (152a, 152b) comprises a first probe (152a) contacting a first terminal electrically connected to a first electrode of the secondary battery (SR) and a second probe (152b) contacting a second terminal electrically connected to a second electrode of the secondary battery (SR),
the temperature sensor (140) is connected to the first probe (152a) or the second probe (152b), and
the vacuum tube (160) is in contact with an electrolyte injection port of the secondary battery (SR).

6. The formation device (100) for the secondary battery (SR) as claimed in any one of the preceding claims, wherein an inside of the vacuum tube (160) is in a negative pressure state.

7. The formation device (100) for the secondary battery (SR) as claimed in any one of the preceding claims, wherein the controller (170) controls the charging/discharging unit (150) to charge the secondary battery (SR) at a C-rate of 0.2 C-1.2 C until the state of charge of the secondary battery (SR) reaches the termination capacity.

8. The formation device (100) for the secondary battery (SR) as claimed in any one of the preceding claims, wherein the controller (170) controls the charging/discharging unit (150) to charge the secondary battery (SR) a plurality of times at different C-rates during the charging.

9. A formation method (200) for a secondary battery (SR) comprising:
a preheating step (S220) of preheating the secondary battery (SR);
a charging step (S240) of charging the secondary battery SR until a state of charge of the secondary battery (SR) reaches a termination capacity;
a temperature control step (S250) of maintaining the secondary battery (SR) at a set temperature range until the state of charge of the secondary battery (SR) reaches the termination capacity; and
a degassing step (S260) of removing gas inside the secondary battery (SR),
wherein the charging step (S240), the temperature control step (S250), and the degassing step (S260) are performed in parallel, and the termination capacity is 40 %-90 %.

10. The formation method (200) for the secondary battery (SR) as claimed in claim 9, further comprising a pre-aging step (S210) of injecting an electrolyte into the secondary battery (SR) and leaving the secondary battery (SR) as is, before the preheating step (S220).

11. The formation method (200) for the secondary battery (SR) as claimed in claim 9 or 10, wherein the preheating step (S220) comprises:
a step of stacking trays (110) on which the secondary battery (SR) is loaded and putting the trays (110) into a preheater (410);
a step of connecting the trays (110) and a heat supply part of the preheater (410); and
a step of preheating the trays (110) to a predetermined specific temperature within 35 °C-65 °C.

12. The formation method (200) for the secondary battery (SR) as claimed in any one of the claims 9 to 11, wherein in the temperature control step (S250), heating is performed by heating a tray (110) on which the secondary battery (SR) is loaded, and cooling is performed by blowing cool air toward the tray (110).

13. The formation method (200) for the secondary battery (SR) as claimed in any one of the claims 9 to 12, wherein in the degassing step (S260), gas inside the secondary battery (SR) is removed by bringing a vacuum tube (160) into contact with an electrolyte injection port of the secondary battery (SR), and an inside of the vacuum tube (160) is in a negative pressure state.

14. The formation method (200) for the secondary battery (SR) as claimed in claim 13, further comprising a step (S270) of releasing the vacuum tube (160) from the electrolyte injection port and sealing the electrolyte injection port, after the degassing step (S260).

15. The formation method (200) for the secondary battery (SR) as claimed in any one of the claims 9 to 14, wherein in the charging step (S240), the secondary battery (SR) is charged a plurality of times at different C-rates within a range of 0.2 C-1.2 C until a state of charge of the secondary battery (SR) reaches the termination capacity.
